# EUROPEAN PATENT SPECIFICATION

(11) **EP 2 572 984 B1**
(45) Date of publication and mention of the grant of the patent: **26.03.2014**
(21) Application number: 12182849.5
(22) Date of filing: 03.09.2012
(51) Int. Cl.: B64C 29/00, B64D 33/04, B64C 15/02

(54) **Vectored exhaust system for tiltrotor aircraft and method**
Schwenkabgassystem für Kipprotor-Flugzeuge und Verfahren
Système d'échappement orientable pour tilt-rotor et procédé

(30) Priority: 20.09.2011 US 201161536650 P; 13.08.2012 US 201213584286
(43) Date of publication of application: 27.03.2013
(73) Proprietor: Bell Helicopter Textron Inc., Fort Worth, TX 76101 (US)
(72) Inventor: Mast, Thomas M., Carrollton, TX Texas 75007 (US); Pedersen, Keith C., Fort Worth, TX Texas 76112 (US); Miller, David L., North Richland Hills, TX Texas 76180 (US); Ivans, Steven Ray, Ponder, TX Texas 76259 (US)
(74) Representative: Lawrence, John

(56) References cited:
- WO-A1-91/05704
- FR-A- 1 373 010
- FR-A1- 2 039 324

## Description

### BACKGROUND

### Technical Field:

The present application relates to a vectored exhaust system for an aircraft.

### Description of Related Art:

A conventional tiltrotor aircraft has an exhaust that is fixed in a specific direction. When the tiltrotor nacelles are vertically oriented to fly in helicopter mode, the hot exhaust gases are directed downward. When the tiltrotor nacelles are horizontally oriented to fly in airplane mode, the hot exhaust gases are directed aft. When the tiltrotor is on the ground, the nacelles are vertically oriented such that the hot exhaust gases are directed towards the ground. In some operational situations, a ground run can cause a risk of damage to the ground surface due to a concentration of the hot exhaust gases. Further, a conventional tiltrotor aircraft does not have an ability to actively control the perceived infrared (IR) signature of the hot exhaust.

Such a tilt rotor is known from WO-91/05704. Document FR-2039324 shows a nacelle for a tilt rotor aircraft including two parts pivoting with respect to each other.

Hence, there is a need for an improved exhaust system for a tiltrotor aircraft.

### DESCRIPTION OF THE DRAWINGS

The novel features believed characteristic of the system of the present application are set forth in the appended claims. However, the system itself (claim 1), as well as a preferred mode of use (claim 16), and further objectives and advantages thereof, will best be understood by reference to the following detailed description when read in conjunction with the accompanying drawings, wherein:
**Figure 1** is a side view of a tiltrotor aircraft having an exhaust system, according to an illustrative embodiment of the present application;
**Figure 2** is a side view of the tiltrotor aircraft having the exhaust system, according to the illustrative embodiment of the present application;
**Figure 3** is a side view of the tiltrotor aircraft having the exhaust system, according to the illustrative embodiment of the present application;
**Figure 4** is a side view of the tiltrotor aircraft having the exhaust system, according to the illustrative embodiment of the present application;
**Figure 5** is a side view of the tiltrotor aircraft having the exhaust system, according to the illustrative embodiment of the present application;
**Figure 6** is a rear view of the tiltrotor aircraft having the exhaust system, according to an illustrative embodiment of the present application;
**Figure 7** is a side view of an exhaust system, according to an illustrative embodiment of the present application;
**Figure 8** is a rear view of the exhaust system, according to the illustrative embodiment of the present application;
**Figure 9** is a partially removed top view of the exhaust system, according to the illustrative embodiment of the present application;
**Figure 10** is a partially removed rear view of the exhaust system, according to the illustrative embodiment of the present application;
**Figure 11** is a partially removed side view of the exhaust system, according to the illustrative embodiment of the present application;
**Figure 12** is a partially removed bottom view of the exhaust system, according to the illustrative embodiment of the present application;
**Figure 13** is a partially removed side view of the exhaust system, according to the illustrative embodiment of the present application;
**Figure 14** is a partially removed cross-sectional view of the exhaust system, taken at section lines 14-14 in Figure 12, according to the illustrative embodiment of the present application; and
**Figure 15** is a schematic view of a control system for controlling the exhaust system, according to an illustrative embodiment of the present application.

### DESCRIPTION OF THE PREFERRED EMBODIMENT

Illustrative embodiments of the system are described below. In the interest of clarity, all features of an actual implementation may not be described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the system described herein may be oriented in any desired direction.

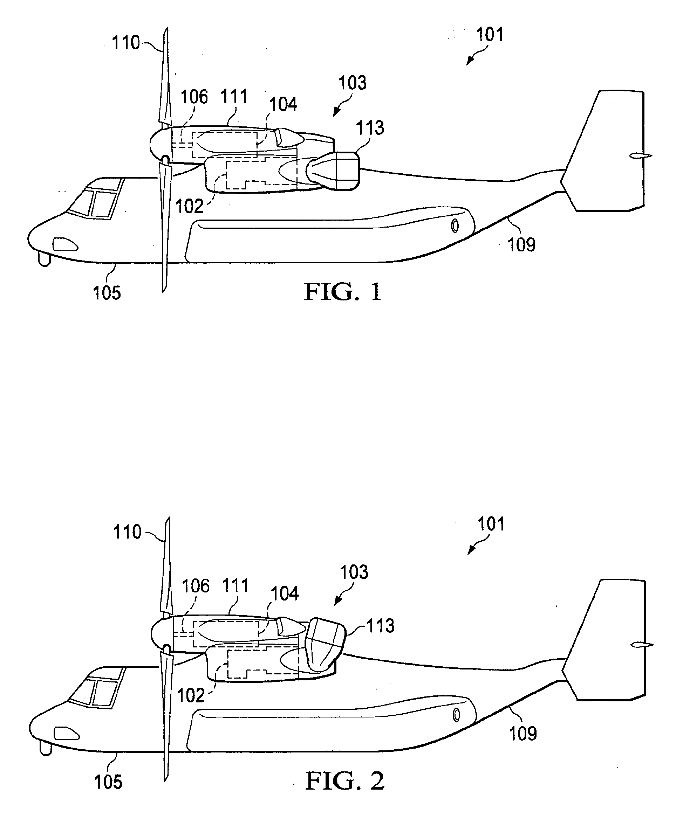

Referring to Figures 1-6, an example tiltrotor aircraft 101 is illustrated. Aircraft 101 includes a fuselage 105, a wing 107 and a tail member 109. Rotatable nacelles 111 are coupled to each end portion of wing 107. The nacelle 111 located on the left side of wing 107 is a mirror image of the nacelle 111 located on the right side of wing 107. Each nacelle 111 houses a propulsion system including an engine 102, a gearbox 104, and drive shaft 106. A plurality of rotor blades 110 are operably associated with a drive shaft in each nacelle 111.

Aircraft 101 is configured to fly in a helicopter mode, in which nacelles 111 are positioned approximately vertical. In addition, aircraft 101 is configured to fly in an airplane mode, in which nacelles 111 are positioned approximately horizontal. It should be appreciated that nacelles 111 can be oriented at any positioned between vertical and horizontal, which can correspond with flying in a conversion mode.

An exhaust system 103 is located on each nacelle 111. For clarity, only the left side nacelle 111 and exhaust system 103 are detailed herein. The right side nacelle 111 is a mirror image of the left side nacelle 111, as one of ordinary skill in the art would fully appreciate having benefit of this disclosure. Exhaust system 103 is configured with a vector nozzle 113. Vector nozzle 113 can be selectively rotated in relation to aircraft 101 and/or nacelle 111 in order to achieve certain desirables. For example, vector nozzle 113 can be oriented to provide maximum flight performance, reduce IR signature, or even to reduce/prevent ground heating, as further described herein.

Referring to Figure 1, aircraft 101 is illustrated in an airplane mode with vector nozzle 113 selectively oriented to direct exhaust gases in an aft direction. In such a configuration, thrust from the exhaust gas is directed aftward, thereby contributing to forward propulsion of aircraft 101.

Referring to Figure 2, aircraft 101 is illustrated in an airplane mode with vector nozzle 113 selectively oriented to direct exhaust gases in an upward direction. In such a configuration, a hot interior portion of exhaust system 103 is hidden from line-of-site of most potential threats, thereby directionally suppressing the perceived infrared (IR) signature of aircraft 101. More specifically, a heat seeking weapon deployable from a lower elevation location, as compared to the elevation of aircraft 101, may not have a line-of-site view of the hot interior portion of exhaust system 103, when vector nozzle 113 is positioned accordingly.

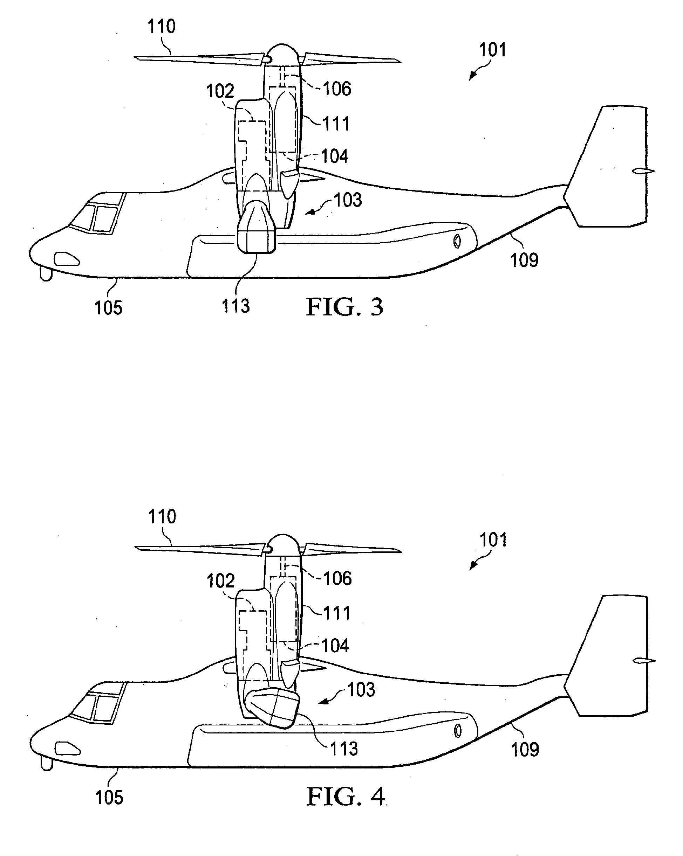

Referring to Figure 3, aircraft 101 is illustrated in a helicopter mode with vector nozzle 113 selectively oriented to direct exhaust gases in a downward direction. In such a configuration, thrust from the exhaust gas is directed down, thereby contributing to vertical lift of aircraft 101. In such a configuration, the hot exhaust gases can contribute to ground heating; however, the directional thrust from the exhaust gas contributes to lift performance of aircraft 101.

Referring to Figure 4, aircraft 101 is illustrated in a helicopter mode with vector nozzle 113 selectively oriented to direct exhaust gases in an aft direction. In such a configuration, the flow of hot exhaust gas is directed aft so as to reduce/prevent heating of the ground surface below each nacelle 111. In such a configuration, the directed thrust from vector nozzle 113 does not contribute or hinder vertical lift of the aircraft 101. However, a hot portion of the interior of the exhaust system 103 may be viewable in a line-of-site view from a position aft of the aircraft 101.

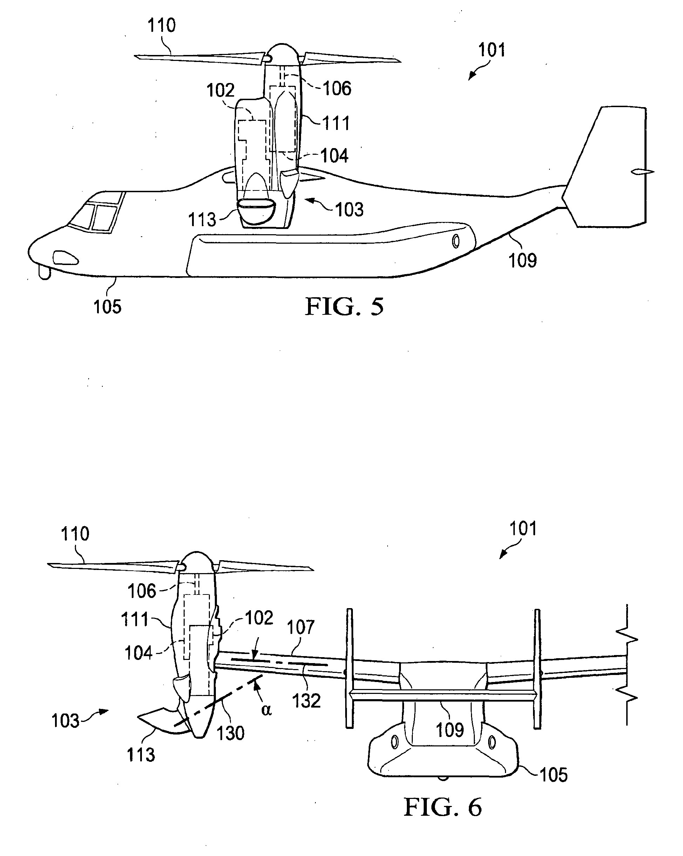

Referring to Figures 5 and 6, aircraft 101 illustrated in a helicopter mode with vector nozzle 113 selectively oriented to direct exhaust gas in an upward/outboard direction. In such a configuration, the directed thrust from vector nozzle 113 may reduce vertical thrust of the aircraft 101; however, a hot portion of the interior of the exhaust system 103 can be substantially hidden from line-of-sight viewing from ground positions.

Vector nozzle 113 can be selectively rotated to achieve certain desirables even during rotation of nacelle 111 between helicopter mode and airplane mode orientations. For example, because vector nozzle 113 has a nozzle rotational axis 130 that is approximately parallel to a nacelle rotational axis 132, vector nozzle 113 can approximately maintain its relative orientation even while nacelle 111 rotates. The relative angle α between nozzle rotational axis 130 and nacelle rotational axis 132 is preferably approximately zero; however, even acute angles, such as less than 20 degrees, can provide desirable results. During operation, aircraft 101 can be in IR suppression mode such that vector nozzle 113 can be oriented to maintain the direction of exhaust gas in an upward/outboard direction. When tiltrotor 101 is in helicopter mode, vector nozzle 113 can be oriented as shown in Figures 5 and 6. However, as nacelle 111 is rotated into airplane mode position, vector nozzle 113 can be rotated in the opposite direction (relative to nacelle 111) so that the exhaust gas direction is maintained in an upward/outboard direction. Because the nozzle rotational axis 130 and nacelle rotational axis 132 are approximately parallel, the exhaust gas direction can be maintained in an upward/outboard direction through the relative rotation between nacelle 111 and vector nozzle 113. This feature of vector nozzle 113 provides for effective suppression of the IR signature through conversion from helicopter mode to airplane mode.

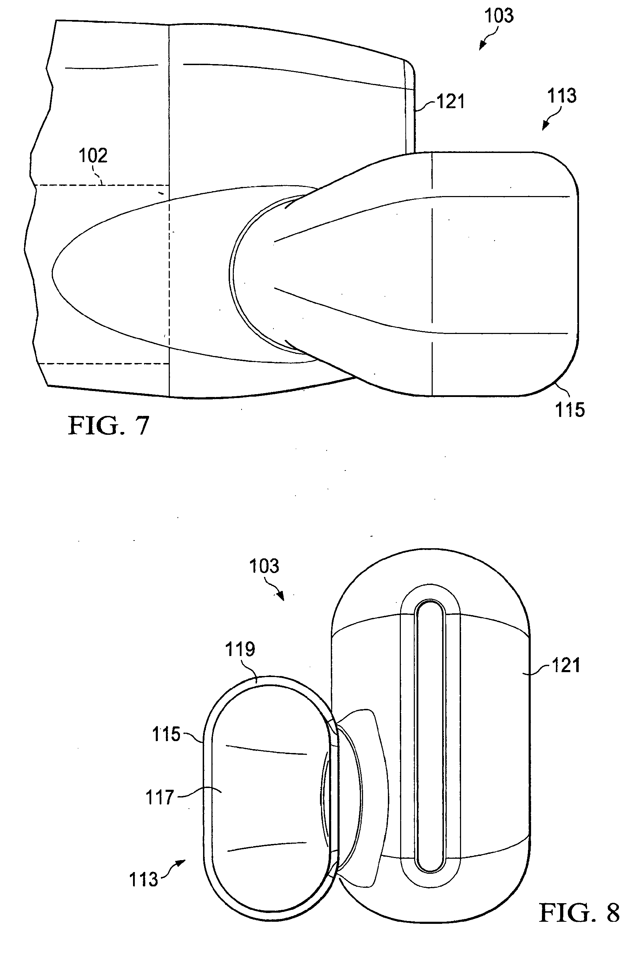

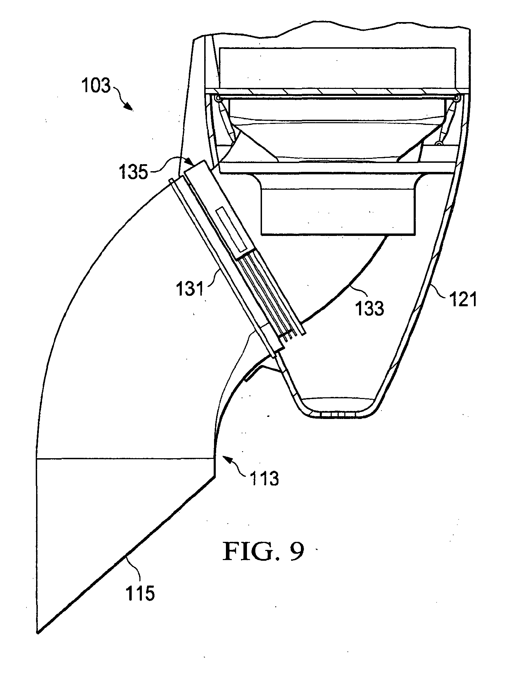

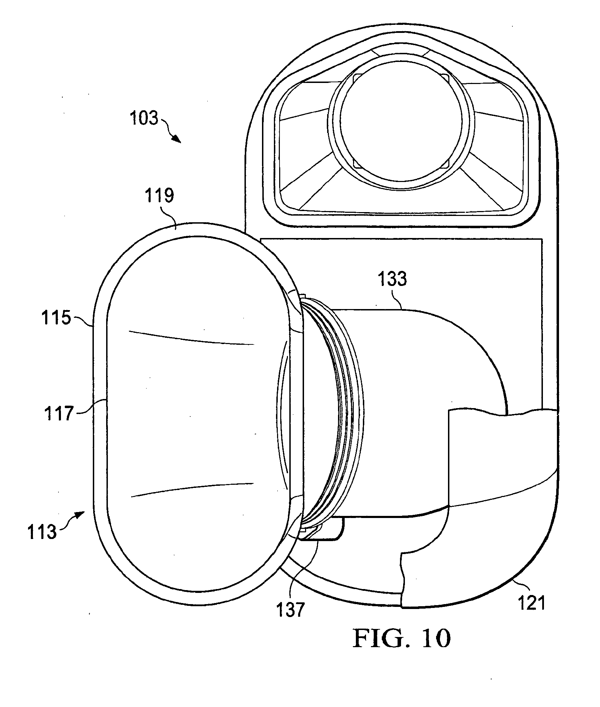

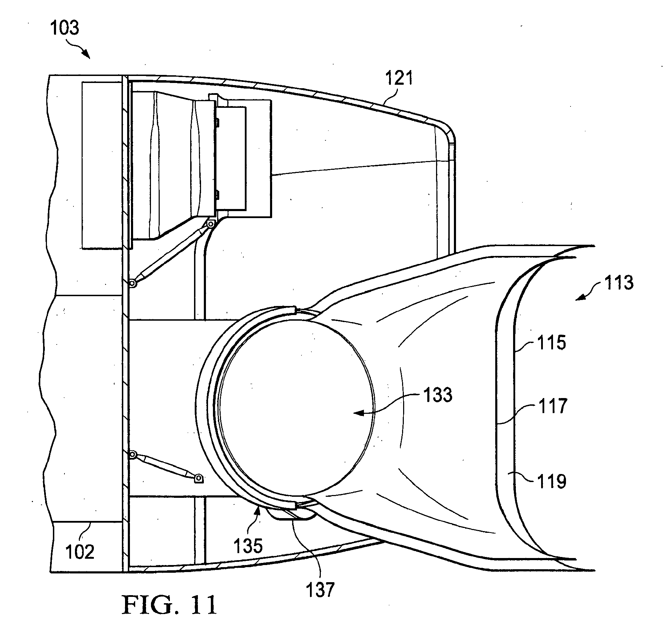

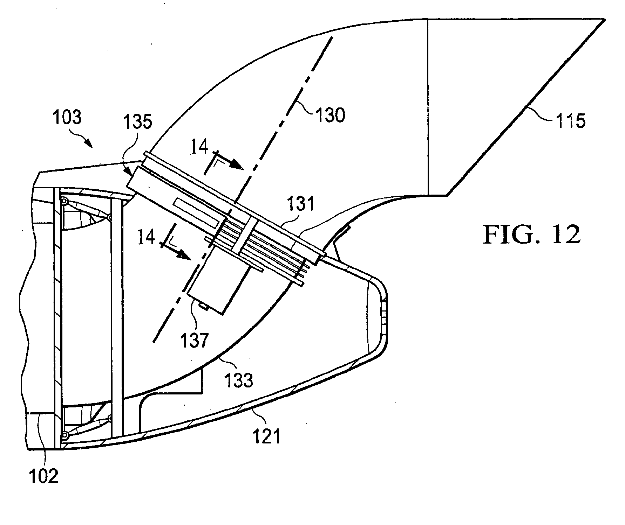

Referring now also to Figures 7-14, exhaust system 103 illustrated in further detail. Vector nozzle 113 can include an outer exhaust duct 115 and a primary exhaust duct 117. Primary exhaust duct 117 is in gaseous fluid communication with the hot engine exhaust via a main engine fixed exhaust 133. A gap 119 between outer exhaust duct 115 and primary exhaust duct 117 can promote the flow of cooling air between of outer exhaust duct 115 and primary exhaust duct 117, so that the IR signature of exhaust system 103 is reduced. More specifically, cool air from the inside of an exhaust fairing 121 is drawn into gap 119 via an inlet 141, so as to provide cooling between the hot primary exhaust duct 117 and outer exhaust duct 115. Further, outer exhaust duct 115 at least partially hides primary exhaust duct 117 from line-of-site vision. As discussed further herein, certain rotational positions of vector nozzle 113 hide primary exhaust duct 117 from line-of-site vision of IR detectors. During operation, primary exhaust duct 117 is considerably hotter than outer exhaust duct 115. As such, exhaust system 103 is configured to selectively position vector nozzle 113 to hide of primary exhaust duct 117 from line-of-site vision of the predicted threat location.

Vector nozzle 113 can be selectively rotated with a control system and a vector nozzle pivot assembly 135. Pivot assembly 135 can include a pivot drive motor 137 mounted to a non-rotating structure. Drive motor 137 imparts a rotational force upon vector nozzle 113 with a flexible drive belt 131 wrapped around a rotating portion of the vector nozzle 113. It should be appreciated that pivot drive motor 137 is merely illustrative of a wide variety of actuator systems that may be used to rotate vector nozzle 113. However, with the illustrated geometry, rotation of vector nozzle 113 can be accomplished with a single pivot joint, thus decreasing complication as compared to other possible vectoring systems. Further, vector nozzle 113 is configured to only rotate about a single axis of rotation 130, thereby achieving efficiency in the mechanical system.

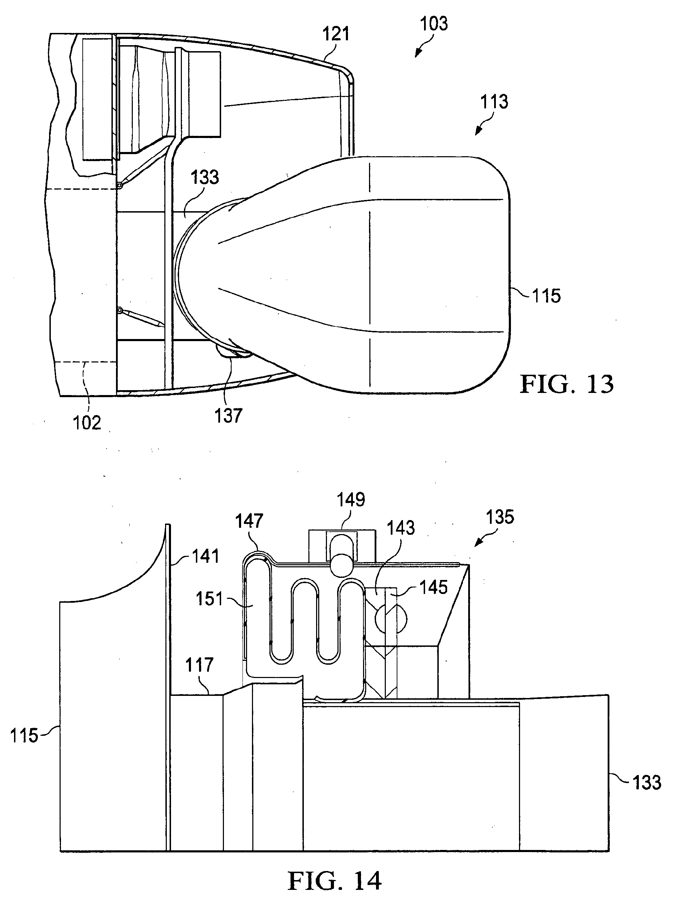

Referring now in particular to Figure 14, a sectional view is illustrated to detail the rotating and non-rotating portions of the exhaust system 103. A thrust bearing includes a non-rotating portion 143 and a rotating portion 145. Rotating portion 145 is coupled to a rotating flange 147. Rotating flange 147 is also coupled to primary exhaust duct 117 and a bellows seal 151. Bellows seal 151 presses against non-rotating portion 143 of the thrust bearing to create a seal capable of withstanding thermal expansion/contraction. Bellows seal 151 also presses against the main engine fixed exhaust 133. A flange clamp 149 can be used to secure the flange components.

Exhaust system 103 illustrated in Figures 7-14 is merely illustrative of a variety of configurations that may be used to allow a vector nozzle 113 to selectively rotate adjacent to a non-rotating exhaust 133.

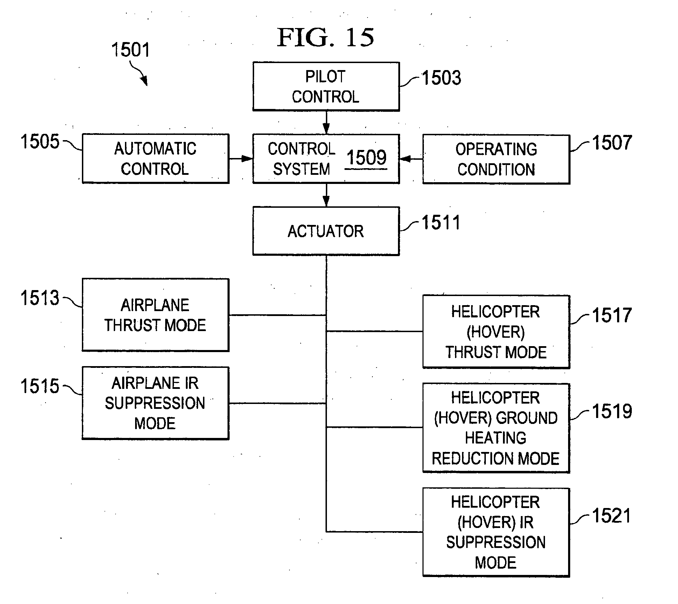

Referring now to Figure 15, a system 1501 is schematically illustrated to detail the functionality and capabilities of the exhaust system of the present application. System 1501 can include a pilot input 1503 for allowing the pilot to input desired positions of the vector nozzle. An automatic control input 1505 can allow the system 1501 to automatically position the vector nozzle. A control system 1509 can receive a data 1507 pertaining to operating conditions of the aircraft. For example, data 1507 can include information related to any perceived threats, the locations of the perceived threats, nacelle position, current aircraft speed/altitude, and current aircraft payload, to name a few. Control system 1509 is configured to send actuation signals to an actuator 1511 in order to selectively position the vector nozzle. Further, control system 1509 determines and dictates the appropriate position of the vector nozzle in part from data 1507.

The position of vector nozzle in an airplane thrust mode 1513 corresponds with the position illustrated in Figure 1. The position of vector nozzle in an airplane IR suppression mode 1515 corresponds with the position illustrated in Figure 2. The position of vector nozzle in a helicopter (hover) thrust mode 1517 corresponds with the position illustrated in Figure 3. The position of vector nozzle in a helicopter (hover) ground heating mode 1519 corresponds with the position illustrated in Figure 4. The position of vector nozzle in a helicopter (hover) IR suppression mode 1521 corresponds with the position illustrated in Figures 5 and 6.

Further, if operation condition 1507 sends data to control system 1509 indicating that the aircraft is operating in a high enemy threat situation, then control system 1509 can command actuator 1511 to position vector nozzle in airplane IR suppression mode 1515 (when in airplane mode) and helicopter IR suppression mode 1521 (when in a hover). Further, if operation condition 1507 sends data to control system 1509 indicating that the aircraft is not operating in a high enemy threat situation and it is desirable to have maximum aircraft performance, then control system 1509 can command actuator 1511 to position vector nozzle in airplane thrust mode 1513 (when in airplane mode) and helicopter thrust mode 1517 (when in a hover). Further, if operation condition 1507 sends data to control system 1509 indicating that the aircraft is not operating in a high enemy threat situation and it is desirable to prevent ground surface heating, then control system 1509 can command actuator 1511 to position vector nozzle in helicopter ground heating reduction mode 1519 (when in a hover). It should be appreciated that system 1501 can be configured to position vector nozzle 113 in hybrid positions, especially during operation of the aircraft between airplane and helicopter modes.

The exhaust system of the present application provides significant advantages, including: 1) providing IR suppression that is threat selectable; 2) providing an exhaust system that can reduce ground heating when in helicopter mode; and 3) providing an exhaust system that can selectively position the thrust vector to increase performance in a variety of flight situations.

The particular embodiments disclosed above are illustrative only, as the apparatus may be modified and practiced in different but equivalent manners apparent to those skilled in the art having the benefit of the teachings herein. Modifications, additions, or omissions may be made to the apparatuses described herein without departing from the scope of the invention. The components of the apparatus may be integrated or separated. Moreover, the operations of the apparatus may be performed by more, fewer, or other components.

Furthermore, no limitations are intended to the details of construction or design herein shown, other than as described in the claims below. It is therefore evident that the particular embodiments disclosed above may be altered or modified and all such variations are considered within the scope of the application. Accordingly, the protection sought herein is as set forth in the claims below.

To aid the Patent Office, and any readers of any patent issued on this application in interpreting the claims appended hereto, applicants wish to note that they do not intend any of the appended claims to invoke paragraph 6 of 35 U.S.C. § 112 as it exists on the date of filing hereof unless the words "means for" or "step for" are explicitly used in the particular claim.

## Claims

1. A nacelle (111) for a tiltrotor aircraft (101) comprising an exhaust system (103), wherein the exhaust system (103) comprises:
a fixed exhaust (133) adapted to be in gaseous communication with an engine (102); and
a primary exhaust duct (117) in gaseous communication with the fixed exhaust (133), the primary exhaust (117) being rotatable relative to the fixed exhaust (133) about a nozzle rotational axis (130);
the nacelle (111) being configured as a housing for the engine (102), the nacelle (111) being rotatable relative to a wing (107) of the tiltrotor aircraft (101) about a nacelle rotational axis (132);
wherein the nozzle rotational axis (130) and the nacelle rotational axis (132) are approximately parallel, or the relative angle between the nozzle rotational axis (130) and the nacelle rotational axis (132) is less than 20°.

2. The nacelle (111) according to claim 1, wherein the nacelle (111) is rotatable between an approximately vertical orientation configurable for a helicopter mode operation of the tiltrotor aircraft (101) and an approximately horizontal orientation configurable for an airplane mode operation of the tiltrotor aircraft (101).

3. The nacelle (111) of claim 1 or claim 2, wherein the primary exhaust duct (117) is comprised within a vector nozzle (113) and the nacelle (111) further comprises:
a control system (1509) configured to process an input to selectively command an actuator (1511) to rotate the vector nozzle (113).

4. The nacelle (111) of claim 1 or claim 2 further comprising a control system (1509) configured to process an input to selectively command an actuator (1511) to rotate the primary exhaust duct (117).

5. The nacelle (111) according to claim 3 or claim 4, wherein the input is one of:
a pilot control input (1503);
an operating condition output (1507); and
an automatic control input (1505).

6. The nacelle (111) according to claim 2, wherein: the primary exhaust duct (117) is configured to selectively direct an exhaust flow in an aft direction while the nacelle (111) is vertically oriented; or the primary exhaust duct (117) is configured to selectively direct an exhaust flow in an upward/outboard direction while the nacelle (111) is vertically oriented; or the primary exhaust duct (117) is configured to selectively direct an exhaust flow in an upward/outboard direction while the nacelle (111) is horizontally oriented.

7. The nacelle (111) according to claim 3 or claim 5, wherein: the control system (1509) is configured to selectively position the vector nozzle (113) in a helicopter hover ground heating reduction mode (1519) such that an exhaust flow is directed in an aftward direction while the nacelle (111) is positioned approximately vertical; or the control system (1509) is configured to selectively position the vector nozzle (113) in a helicopter hover infrared signature suppression mode (1521) such that an exhaust flow is directed in an upward direction while the nacelle (111) is positioned approximately vertical; or the control system (1509) is configured to selectively position the vector nozzle (113) in an airplane infrared signature suppression mode (1515) such that an exhaust flow is directed in an upward direction while the nacelle (111) is positioned approximately horizontal.

8. The nacelle (111) according to any one of the preceding claims, further comprising:
an outer exhaust duct (115) located adjacent to the primary exhaust duct (117) creating a gap (119) therebetween.

9. The nacelle (111) according to claim 8, wherein the gap (119) is configured for the flow of cooling air between the primary exhaust duct (117) and the outer exhaust duct (115).

10. The nacelle (111) of claim 3, claim 5 as it depends on claim 3, or claim 7, wherein the vector nozzle (113) further comprises:
an outer exhaust duct (115) located adjacent to the primary exhaust duct (117) creating a gap (119) therebetween, the outer exhaust duct (115) being configured to hide the primary exhaust duct (117) from a line of site vision of an infrared signature detector.

11. The nacelle (111) according to claim 3, wherein the vector nozzle (1 13) further comprises:
an outer exhaust duct (115) located adjacent to the primary exhaust duct (117) creating a gap (119) therebetween, the gap (119) being configured to allow for a flow of cooling air between the primary exhaust duct (117) and the outer exhaust duct (115).

12. The nacelle (111) according to claim 9 or claim 11, wherein the cooling air is drawn from an inlet (141) formed between a base portion of the outer exhaust duct (115) and the primary exhaust duct (117).

13. The nacelle (111) according to claim 8 or claim 10, further comprising:
an actuator (137) configured for imparting a rotational force to the primary exhaust duct (117).

14. The nacelle (111) according to claim 13, further comprising:
a drive belt (131) operably associated with the actuator (137), the drive belt (131) at least partially wrapped around the outer exhaust duct (115).

15. The nacelle (111) according to claim 1, further comprising:
a bellows seal (151) in pressing contact with the fixed exhaust (133) and the primary exhaust duct (117), the bellows seal (151) being configured to prevent the leakage of exhaust gas while allowing a relative rotation between the fixed exhaust (133) and the primary exhaust duct (117).

16. A method of suppressing infrared signature of a tiltrotor aircraft (101) having a nacelle (111), the method comprising:
orienting a rotatable vector nozzle (113) to direct an exhaust gas in an upward direction;
maintaining an approximate orientation of the rotatable vector nozzle (113) as the nacelle (111) rotates between a vertical position and a horizontal position by rotating the rotatable vector nozzle (113) relative to the nacelle (111).

17. The method according to claim .16, wherein the step of maintaining the approximate orientation of the rotatable vector nozzle (113) is achieved by rotating the vector nozzle (113) in the opposite direction of the nacelle rotation direction.

## Patentansprüche

1. Gondel (111) für ein Kipprotor-Flugzeug (101), ein Abgassystem (103) aufweisend, wobei das Abgassystem (103) umfasst:
einen stationären Auspuff (133), der so ausgelegt ist, dass er mit einem Verbrennungsmotor (102) in Verbindung steht; und
einen primären Auspuffkanal (117), der mit dem stationären Auspuff (133) in Verbindung steht, wobei der primäre Auspuff (117) relativ zum stationären Auspuff (133) um eine Düsendrehachse (130) herum drehbar ist;
wobei die Gondel (111) als Gehäuse für einen Verbrennungsmotor (102) gestaltet ist, die Gondel (111) relativ zu einem Flügel (107) des Kipprotor-Flugzeugs (101) um eine Gondeldrehachse (132) drehbar ist;
wobei die Düsendrehachse (130) und die Gondeldrehachse (132) ungefähr parallel sind, oder der relative Winkel zwischen der Düsendrehachse (130) und der Gondeldrehachse (132) kleiner ist als 20°.

2. Gondel (111) nach Anspruch 1, wobei die Gondel (111) zwischen einer ungefähr vertikalen Ausrichtung, die für einen Betrieb des Kipprotor-Flugzeugs (101) im Helikoptermodus konfigurierbar ist, und einer ungefähr horizontalen Ausrichtung, die für einen Betrieb des Kipprotor-Flugzeugs (101) im Flugzeugmodus konfigurierbar ist, gedreht werden kann.

3. Gondel (111) nach Anspruch 1 oder Anspruch 2, wobei der primäre Auspuffkanal (117) innerhalb einer Vektordüse (113) enthalten ist, und die Gondel (111) ferner aufweist:
ein Steuersystem (1509), das so gestaltet ist, dass es eine Eingabe verarbeitet, die einem Stellglied (1511) selektiv befiehlt, die Vektordüse (113) zu betätigen.

4. Gondel (111) nach Anspruch 1 oder Anspruch 2, ferner ein Steuersystem (1509) aufweisend, das so gestaltet ist, dass es eine Eingabe verarbeitet, die einem Stellglied (1511) selektiv befiehlt, den primären Auspuffkanal (117) zu drehen.

5. Gondel (111) nach Anspruch 3 oder Anspruch 4, wobei die Eingabe:
eine Steuereingabe eines Piloten ist;
eine Betriebszustandsausgabe (1507) ist; oder
eine automatische Steuereingabe (1505) ist.

6. Gondel (111) nach Anspruch 2, wobei: der primäre Auspuffkanal (117) so gestaltet ist, dass er selektiv einen Abgasstrom heckwärts lenkt, während die Gondel (111) vertikal ausgerichtet ist; oder der primäre Auspuffkanal (117) so gestaltet ist, dass er selektiv einen Abgasstrom aufwärts/außenbords lenkt, während die Gondel (111) vertikal ausgerichtet ist; oder der primäre Auspuffkanal (117) so gestaltet ist, dass er einen Abgasstrom aufwärts/außenbords lenkt, während die Gondel (111) horizontal ausgerichtet ist.

7. Gondel (111) nach Anspruch 3 oder Anspruch 5, wobei: das Steuersystem (1509) so gestaltet ist, dass es die Vektordüse (113) selektiv in einem Helikopterschwebflug-Bodenerwärmungsverringerungsmodus (1519) positioniert, so dass ein Abgasstrom heckwärts gelenkt wird, während die Gondel (111) ungefähr vertikal positioniert ist; oder das Steuersystem (1509) so gestaltet ist, dass es die Vektordüse (113) selektiv in einem Helikopterschwebflug-Infrarotsignaturunterdrückungsmodus (1521) anordnet, so dass ein Abgasstrom aufwärts gelenkt wird, während die Gondel (111) ungefähr vertikal angeordnet ist; oder das Steuersystem (1509) so gestaltet ist, dass es die Vektordüse (113) in einem Flugzeug-Infrarotsignaturunterdrückungsmodus (1515) so anordnet, dass ein Abgasstrom aufwärts gerichtet wird, während die Gondel (111) ungefähr horizontal angeordnet ist.

8. Gondel (111) nach einem der vorangehenden Ansprüche, ferner aufweisend:
einen äußeren Auspuffkanal (115), der angrenzend an den primären Auspuffkanal (117) angeordnet ist, wobei eine Lücke (119) zwischen beiden erzeugt wird.

9. Gondel (111) nach Anspruch 8, wobei die Lücke (119) für ein Durchströmen von Kühlluft zwischen dem primären Auspuffkanal (117) und dem äußeren Auspuffkanal (115) ausgelegt ist.

10. Gondel (111) nach Anspruch 3, Anspruch 5, soweit dieser von Anspruch 3 abhängt, oder Anspruch 7, wobei die Vektordüse (113) ferner aufweist:
einen äußeren Auspuffkanal (115), der angrenzend an den primären Auspuffkanal (117) angeordnet ist, wobei eine Lücke (119) dazwischen entsteht, wobei der äußere Auspuffkanal (115) so gestaltet ist, dass er den primären Auspuffkanal (117) vor einer Sichtlinienerfassung eines Infrarotsignaturdetektors verbirgt.

11. Gondel (111) nach Anspruch 3, wobei die Vektordüse (113) ferner aufweist:
einen äußeren Auspuffkanal (115), der angrenzend an den primären Auspuffkanal (117) angeordnet ist, wobei eine Lücke (119) zwischen ihnen entsteht, wobei die Lücke (119) so gestaltet ist, dass sie einen Durchstrom von Kühlluft zwischen dem primären Auspuffkanal (117) und dem äußeren Auspuffkanal (115) zulässt.

12. Gondel (111) nach Anspruch 9 oder Anspruch 11, wobei die Kühlluft aus einem Einlass (141), der zwischen einem Basisabschnitt des äußeren Auspuffkanals (115) und des primären Auspuffkanals (117) gebildet ist, angesaugt wird.

13. Gondel (111) nach Anspruch 8 oder Anspruch 10, ferner aufweisend:
ein Stellglied (137), das dafür ausgelegt ist, dem primären Auspuffkanal (117) eine Drehkraft mitzuteilen.

14. Gondel (111) nach Anspruch 13, ferner aufweisend:
einen Antriebsriemen (131), der wirkmäßig mit dem Stellglied (137) verbunden ist, wobei der Antriebsriemen (131) zumindest zum Teil um den äußeren Auspuffkanal (115) herumgewickelt ist.

15. Gondel (111) nach Anspruch 1, ferner aufweisend:
eine Balgdichtung (151) in Druckkontakt mit dem stationären Auspuff (133) und dem primären Auspuffkanal (117), wobei die Balgdichtung (151) so gestaltet ist, dass sie ein Austreten von Abgas verhindert, während sie eine relative Drehung zwischen dem stationären Auspuff (133) und dem primären Auspuffkanal (117) zulässt.

16. Verfahren zum Unterdrücken einer Infrarotsignatur eines Kipprotor-Flugzeugs (101) mit einer Gondel (111), wobei das Verfahren umfasst:
Ausrichten einer drehbaren Vektordüse (113), um ein Abgas aufwärts zu lenken;
Aufrechterhalten einer ungefähren Ausrichtung der Vektordüse (113), während sich die Gondel (111) zwischen einer vertikalen Position und einer horizontalen Position bewegt, durch Drehen der drehbaren Vektordüse (113) in Bezug auf die Gondel (111).

17. Verfahren nach Anspruch 16, wobei der Schritt des Aufrechterhaltens der ungefähren Ausrichtung der drehbaren Vektordüse (113) durch Drehen der Vektordüse (113) in der zur Gondeldrehrichtung entgegengesetzten Richtung erreicht wird.

## Revendications

1. Une nacelle (111) pour un aéronef à rotor basculant (101) comprenant un système d'échappement (103), où le système d'échappement (103) comprend :
un échappement fixe (133) adapté de façon à être en communication gazeuse avec un moteur (102), et
un conduit d'échappement primaire (117) en communication gazeuse avec l'échappement fixe (133), l'échappement primaire (117) étant pivotable par rapport à l'échappement fixe (133) autour d'un axe de rotation de buse (130),
la nacelle (111) étant configurée sous la forme d'un logement pour le moteur (102), la nacelle (111) étant pivotable par rapport à une aile (107) de l'aéronef à rotor basculant (101) autour d'un axe de rotation de nacelle (132),
où l'axe de rotation de buse (130) et l'axe de rotation de nacelle (132) sont approximativement parallèles, ou l'angle relatif entre l'axe de rotation de buse (130) et l'axe de rotation de nacelle (132) est inférieur à 20°.

2. La nacelle (111) selon la Revendication 1, où la nacelle (111) est pivotable entre une orientation approximativement verticale configurable pour un fonctionnement en mode hélicoptère de l'aéronef à rotor basculant (101) et une orientation approximativement horizontale configurable pour un fonctionnement en mode aéronef de l'aéronef à rotor basculant (101).

3. La nacelle (111) selon la Revendication 1 ou 2, où le conduit d'échappement primaire (117) est contenu à l'intérieur d'une buse à vecteur (113) et la nacelle (111) comprend en outre :
un système de commande (1509) configuré de façon à traiter une entrée destinée à commander de manière sélective un actionneur (1511) de façon à faire pivoter la buse à vecteur (113).

4. La nacelle (111) selon la Revendication 1 ou 2 comprenant en outre un système de commande (1509) configuré de façon à traiter une entrée destinée à commander de manière sélective un actionneur (1511) de façon à faire pivoter le conduit d'échappement primaire (117).

5. La nacelle (111) selon la Revendication 3 ou 4, où l'entrée est une entrée parmi :
une entrée de commande de pilote (1503),
une sortie d'état de fonctionnement (1507), et
une entrée de commande automatique (1505).

6. La nacelle (111) selon la Revendication 2, où : le conduit d'échappement primaire (117) est configuré de façon à diriger de manière sélective un flux d'échappement dans une direction arrière tandis que la nacelle (111) est orientée verticalement, ou le conduit d'échappement primaire (117) est configuré de façon à diriger de manière sélective un flux d'échappement dans une direction vers le haut/vers l'extérieur tandis que la nacelle (111) est orientée verticalement, ou le conduit d'échappement primaire (117) est configuré de façon à diriger de manière sélective un flux d'échappement dans une direction vers le haut/vers l'extérieur tandis que la nacelle (111) est orientée horizontalement.

7. La nacelle (111) selon la Revendication 3 ou 5, où : le système de commande (1509) est configuré de façon à positionner de manière sélective la buse à vecteur (113) dans un mode de réduction d'échauffement du sol en vol stationnaire d'hélicoptère (1519) de sorte qu'un flux d'échappement soit dirigé dans une direction vers l'arrière tandis que la nacelle (111) est positionnée approximativement verticalement, ou le système de commande (1509) est configuré de façon à positionner de manière sélective la buse à vecteur (113) dans un mode de suppression de signature infrarouge en vol stationnaire d'hélicoptère (1521) de sorte qu'un flux d'échappement soit dirigé dans une direction vers le haut tandis que la nacelle (111) est positionnée approximativement verticalement, ou le système de commande (1509) est configuré de façon à positionner de manière sélective la buse à vecteur (113) dans un mode de suppression de signature infrarouge d'aéronef (1515) de sorte qu'un flux d'échappement soit dirigé dans une direction vers le haut tandis que la nacelle (111) est positionnée approximativement horizontalement.

8. La nacelle (111) selon l'une quelconque des Revendications précédentes, comprenant en outre :
un conduit d'échappement extérieur (115) situé adjacent au conduit d'échappement primaire (117) créant un espace (119) entre eux.

9. La nacelle (111) selon la Revendication 8, où l'espace (119) est configuré pour l'écoulement d'un air de refroidissement entre le conduit d'échappement primaire (117) et le conduit d'échappement extérieur (115).

10. La nacelle (111) selon la Revendication 3, la Revendication 5 lorsqu'elle dépend de la Revendication 3, ou la Revendication 7, où la buse à vecteur (113) comprend en outre :
un conduit d'échappement extérieur (115) situé adjacent au conduit d'échappement primaire (117) créant un espace (119) entre eux, le conduit d'échappement extérieur (115) étant configuré de façon à masquer le conduit d'échappement primaire (117) d'une vision en ligne de visée d'un détecteur de signature infrarouge.

11. La nacelle (111) selon la Revendication 3, où la buse à vecteur (113) comprend en outre :
un conduit d'échappement extérieur (115) situé adjacent au conduit d'échappement primaire (117) créant un espace (119) entre eux, l'espace (119) étant configuré de façon à permettre un écoulement d'un air de refroidissement entre le conduit d'échappement primaire (117) et le conduit d'échappement extérieur (115).

12. La nacelle (111) selon la Revendication 9 ou 11, où l'air de refroidissement est aspiré à partir d'une admission (141) formée entre une partie de base du conduit d'échappement extérieur (115) et le conduit d'échappement primaire (117).

13. La nacelle (111) selon la Revendication 8 ou 10, comprenant en outre :
un actionneur (137) configuré de façon à impartir une force de rotation au conduit d'échappement primaire (117).

14. La nacelle (111) selon la Revendication 13, comprenant en outre :
une courroie d'entraînement (131) associée de manière opérationnelle à l'actionneur (137), la courroie d'entraînement (131) étant au moins partiellement enroulée autour du conduit d'échappement extérieur (115).

15. La nacelle (111) selon la Revendication 1, comprenant en outre :
un soufflet d'étanchéité (151) en contact par pression avec l'échappement fixe (133) et le conduit d'échappement primaire (117), le soufflet d'étanchéité (151) étant configuré de façon à empêcher la fuite de gaz d'échappement tout en permettant une rotation relative entre l'échappement fixe (133) et le conduit d'échappement primaire (117).

16. Un procédé de suppression d'une signature infrarouge d'un aéronef à rotor basculant (101) possédant une nacelle (111), le procédé comprenant :
l'orientation d'une buse à vecteur pivotable (113) de façon à diriger un gaz d'échappement dans une direction vers le haut,
la conservation d'une orientation approximative de la buse à vecteur pivotable (113) pendant que la nacelle (111) pivote entre une position verticale et une position horizontale par la rotation de la buse à vecteur pivotable (113) par rapport à la nacelle (111).

17. Le procédé selon la Revendication 16, où l'opération de conservation de l'orientation approximative de la buse à vecteur pivotable (113) est réalisée par la rotation de la buse à vecteur (113) dans la direction opposée de la direction de rotation de la nacelle.
